# NEW EUROPEAN PATENT SPECIFICATION

(11) **EP 2 464 771 B2**
(45) Date of publication and mention of the opposition decision: **25.11.2020**
(45) Mention of the grant of the patent: 25.12.2013
(21) Application number: 10744634.6
(22) Date of filing: 06.08.2010
(51) Int. Cl.: D04H 1/64, C08B 37/00, C08L 5/00, C03C 25/32

(54) **CURABLE FIBERGLASS BINDER COMPRISING AMINE SALT OF INORGANIC ACID**
HÄRTBARER GLASFASERBINDER MIT EINEM AMINSALZ AUS EINER ANORGANISCHEN SÄURE
LIANT DE FIBRE DE VERRE DURCISSABLE COMPRENANT UN SEL D'AMINE D'UN ACIDE MINÉRAL

(30) Priority: 11.08.2009 US 539211
(43) Date of publication of application: 20.06.2012
(73) Proprietor: Johns Manville, Denver, CO 80202 (US)
(72) Inventor: SHOOSHTARI, Kiarash, Alavi, Littleton CO 80127 (US)
(74) Representative: Dörr, Klaus
(86) International application number: PCT/US2010/044668
(87) International publication number: WO 2011/019590

(56) References cited:
- EP-A1- 1 652 868
- EP-A1- 2 223 941
- WO-A1-03/022899
- WO-A1-2010/106181
- DE-A1- 1 905 054
- DE-A1-102004 033 561
- GB-A- 2 451 719
- US-A- 3 006 879
- US-A- 3 383 267
- US-A- 3 513 001
- US-A- 4 048 127
- US-A- 4 410 685
- US-A1- 2007 027 283

## Description

### BACKGROUND

The subject invention pertains to an improved binding composition for use with fiberglass. More specifically, the invention pertains to an improved curable composition comprising a mixture of an aldehyde or ketone and an amine salt of an inorganic acidas described in claim 1. Once applied as a coating on the fiberglass, the binding composition is cured. The binder of the present invention is useful as a fully acceptable replacement for formaldehyde-based binders in non-woven fiberglass products, and actually provides a binder exhibiting improved physical properties.

Fiberglass binders have a variety of uses ranging from stiffening applications where the binder is applied to woven or non-woven fiberglass sheet goods and cured, producing a stiffer product; thermo-forming applications wherein the binder resin is applied to a sheet or lofty fibrous product, following which it is dried and optionally B-staged to form an intermediate but yet curable product; and to fully cured systems such as building insulation.

Fibrous glass insulation products generally comprise matted glass fibers bonded together by a cured thermoset polymeric material. Molten streams of glass are drawn into fibers of random lengths and blown into a forming chamber where they are randomly deposited as a mat onto a traveling conveyor. The fibers, while in transit in the forming chamber and while still hot from the drawing operation, are sprayed with an aqueous binder. A phenol-formaldehyde binder has been used throughout the fibrous glass insulation industry. The residual heat from the glass fibers and the flow of air through the fibrous mat during the forming operation are generally sufficient to volatilize water from the binder, thereby leaving the remaining components of the binder on the fibers as a viscous or semi-viscous high solid liquid. The coated fibrous mat is transferred to a curing oven where heated air, for example, is blown through the mat to cure the binder and rigidly bond the glass fibers together.

Fiberglass binders used in the present sense should not be confused with matrix resins which are an entirely different and non-analogous field of art. While sometimes termed "binders", matrix resins act to fill the entire interstitial space between fibers, resulting in a dense, fiber reinforced product where the matrix must translate the fiber strength properties to the composite, whereas "binder resins" as used herein are not space-filling, but rather coat only the fibers, and particularly the junctions of fibers. Fiberglass binders also cannot be equated with paper or wood product "binders" where the adhesive properties are tailored to the chemical nature of the cellulosic substrates. Many such resins are not suitable for use as fiberglass binders. One skilled in the art of fiberglass binders would not look to cellulosic binders to solve any of the known problems associated with fiberglass binders.

Binders useful in fiberglass insulation products generally require a low viscosity in the uncured state, yet possess characteristics so as to form a rigid thermoset polymeric binder for the glass fibers when cured. A low binder viscosity in the uncured state is required to allow the mat to be sized correctly. Also, viscous binders commonly tend to be tacky or sticky and hence they lead to the accumulation of fiber on the forming chamber walls. This accumulated fiber may later fall onto the mat causing dense areas and product problems. A binder which forms a rigid matrix when cured is required so that a finished fiberglass thermal insulation product, when compressed for packaging and shipping, will recover to its as-made vertical dimension when installed in a building.

From among the many thermosetting polymers, numerous candidates for suitable thermosetting fiberglass binder resins exist. However, binder-coated fiberglass products are often of the commodity type, and thus cost becomes a driving factor, generally ruling out resins such as thermosetting polyurethanes, epoxies, and others. Due to their excellent cost/performance ratio, the resins of choice in the past have been phenol-formaldehyde resins. Phenol-formaldehyde resins can be economically produced, and can be extended with urea prior to use as a binder in many applications. Such urea-extended phenol-formaldehyde binders have been the mainstay of the fiberglass insulation industry for years, for example.

Over the past several decades however, minimization of volatile organic compound emissions (VOCs) and hazardous air pollutants (HAPS) both on the part of the industry desiring to provide a cleaner environment, as well as by Federal regulation, has led to extensive investigations into not only reducing emissions from the current formaldehyde-based binders, but also into candidate replacement binders. For example, subtle changes in the ratios of phenol to formaldehyde in the preparation of the basic phenol-formaldehyde resole resins, changes in catalysts, and addition of different and multiple formaldehyde scavengers, has resulted in considerable improvement in emissions from phenol-formaldehyde binders as compared with the binders previously used. However, with increasingly stringent Federal regulations, more and more attention has been paid to alternative binder systems which are free from formaldehyde.

One such candidate binder system employs polymers of acrylic acid as a first component, and a polyol such as triethanolamine, glycerine, or a modestly oxyalkylated glycerine as a curing or "crosslinking" component. The preparation and properties of such poly(acrylic acid)-based binders, including information relative to the VOC emissions, and a comparison of binder properties versus urea-formaldehyde binders is presented in "Formaldehyde-Free Crosslinking Binders For Non-Wovens," Charles T. Arkins et al., TAPPI Journal, Vol. 78, No. 11, pages 161-168, November 1995. The binders disclosed by the Arkins article, appear to be B-stageable as well as being able to provide physical properties similar to those of urea/formaldehyde resins.

U.S. Pat. No. 5,340,868 discloses fiberglass insulation products cured with a combination of a polycarboxy polymer, a-hydroxyalkylamide, and at least one trifunctional monomeric carboxylic acid such as citric acid. The specific polycarboxy polymers disclosed are poly(acrylic acid) polymers. See also, U.S. Pat. No. 5,143,582.

U.S. Pat. No. 5,318,990 discloses a fibrous glass binder which comprises a polycarboxy polymer, a monomeric trihydric alcohol and a catalyst comprising an alkali metal salt of a phosphorous-containing organic acid.

U.S. 2007/0142596 discloses binders comprised of a mixture of Maillard reactants. The reactants comprise a monosaccharide and an ammonium salt of a polycarboxylic acid.

Published European Patent Application EP 0 583 086 A1 appears to provide details of polyacrylic acid binders whose cure is catalyzed by a phosphorus-containing catalyst system as discussed in the Arkins article previously cited. Higher molecular weight poly(acrylic acids) are stated to provide polymers exhibiting more complete cure. See also U.S. Pat. Nos. 5,661,213; 5,427,587; 6,136,916; and 6,221,973.

GB-A-2,451,719 discloses a curable composition comprising an aldehyde or ketone and an amine salt of an inorganic acid. Similar rapid cure carbohydrate composition comprising one or more ammonium salt of an inorganic acid and at least one carbohydrate are known from EP-A-2,223,941 as well as from DE-A-10 2004 033561 which discloses a curable composition comprising one or more ammonium salt of an inorganic acid and at least one carbohydrate.

Some polycarboxy polymers have been found useful for making fiberglass insulation products. Problems of clumping or sticking of the glass fibers to the inside of the forming chambers during the processing, as well as providing a final product that exhibits the recovery and rigidity necessary to provide a commercially acceptable fiberglass insulation product, have been overcome. See, for example, U.S. Pat. No. 6,331,350. The thermosetting acrylic resins have been found to be more hydrophilic than the traditional phenolic binders, however. This hydrophilicity can result in fiberglass insulation that is more prone to absorb liquid water, thereby possibly compromising the integrity of the product. Also, the thermosetting acrylic resins now being used as binding agents for fiberglass have been found to not react as effectively with silane coupling agents of the type traditionally used by the industry increasing product cost. The addition of silicone as a hydrophobing agent results in problems when abatement devices are used that are based on incineration as well as additional cost. Also, the presence of silicone in the manufacturing process can interfere with the adhesion of certain facing substrates to the finished fiberglass material. Overcoming these problems will help to better utilize polycarboxy polymers in fiberglass binders.

Accordingly, in one aspect the present invention provides a novel, non-phenol-formaldehyde binder.

Another aspect of the invention provides a novel fiberglass binder which provides advantageous flow properties, the possibility of lower binder usage, the possibility of overall lower energy consumption, elimination of interference in the process by a silicone, and improved overall economics.

Still another aspect of the present invention is to provide a binder for fiberglass having improved economics, while also enjoying improved physical properties. In addition, the present invention increases the sustainable portion of the binder and reduces the dependency on a fossil based source for the resin.

These and other aspects of the present invention will become apparent to the skilled artisan upon a review of the following description and the claims appended hereto.

### SUMMARY OF THE INVENTION

A curable composition for use in the binding of fiberglass is provided as defined in claim 1 and claims 2 to 8. The preferred acid is phosphoric acid. This composition upon curing is capable of forming a water-insoluble binder which exhibits good adhesion to glass.

A process for binding fiberglass is provided as defined in claim 9 and claims 10 and 11. The composition is cured while present as a coating on the fiberglass to form a water-insoluble binder which exhibits good adhesion to the fiberglass.

In a preferred embodiment the resulting fiberglass product is building insulation. In other embodiments the fiberglass product is a microglass-based substrate useful when forming a printed circuit board, battery separator, filter stock, or reinforcement scrim.

### DETAILED DESCRIPTION OF PREFERRED EMBODIMENTS

The novel fiberglass binder of the present invention is a curable composition comprising an aldehyde or ketone and an amine salt of an inorganic acid as defined in claim 1 and claims 2 to 8. Once the curable composition is applied to fiberglass, it can be cured to provide a strong, water-insoluble binder, exhibiting good adhesion to the glass. The curing of the binder has also been seen to be much faster, thereby adding to the economic benefits of the binder.

Amine-acid salts, which are amine salts, can be used. Any suitable inorganic acid can be used. The acids can be oxygenated acids or non-oxygenated acids. Examples of suitable oxygenated acids include, but are not limited to, phosphoric acid, pyrophosphoric acid, phosphorus acid, sulfuric acid, sulfurous acid, hypochloric acid and chlorate acid. Examples of non-oxygenated acids include, but are not limited to, hydrochloric acid, hydrogen sulfide and phosphine. Phosphoric acid is most preferred.

The salt can be prepared using any conventional technique to create salts of inorganic acids. Amine-acid salts are also preferred, with such salts obtained by reacting the selected amine with the acid in water. This is a very simple and straightforward reaction. The molar ratio of acid functionality to amine functionality can vary, and is generally from 1:25 to 25:1. More preferred is a ratio of from 1:5 to 5:1, with a ratio of about 1:2 to 2:1 being most preferred.

The amine functionality is a di- functional primary amine. According to the invention ethylene diamine, 1,3-propanediamine, 1,4-butanediamine, 1,5-pentanediamine, 1,6-hexanediamine and mixtures of these, can be used. A preferred diamine for use in this embodiment of the invention are 1,4-butanediamine and 1,6-hexanediamine.

To the solution of the amine salt of inorganic acid, the aldehyde or ketone can be added.. Due to their higher reactivity, aldehydes are preferred to ketones. The composition comprises the amine salt of inorganic acid and the aldehyde and/or ketone as defined in claim 1. Some small amount of reaction does take place within the composition between the components. However, the reaction is completed during the curing step, followed by the cross-linking reaction of curing.

Examples of suitable aldehydes are reducing mono, di- and polysaccharides such as glucose, celobrose, maltose, etc. can be used, with reducing monosaccharides, such as glucose being preferred. The molar ratio of salt to carbonyl (saccharide) can vary, but is in the range of from 1:20 to 20:1, with a ratio of 1:10 to 10:1 being most preferred.

Examples of suitable ketones include, but are not limited to, acetone, acetyl acetone, 1,3-dihydroxy acetone, benzel, bonzoin and fructose.

The composition when applied to the fiberglass optionally can include adhesion prompters, oxygen scavengers, solvents, emulsifiers, pigments, fillers, anti-migration aids, coalescent aids, wetting agents, biocides, plasticizers, organosilanes, anti-foaming agents, colorants, waxes, suspending agents, anti-oxidants, crosslinking catalysts, secondary crosslinkers, and combinations of these.

The fiberglass that has the composition according to the present invention applied to it may take a variety of forms and in a preferred embodiment is building insulation. Use in roofing membranes is also preferable as good tensile and elongation is observed. In other embodiments the fiberglass is a microglass-based substrate useful in applications such as printed circuit boards, battery separators, filter stock, and reinforcement scrim.

The composition of the present invention can be applied to the fiberglass by a variety of techniques. In preferred embodiments these include spraying, spin-curtain coating, and dipping-roll coating. The composition can be applied to freshly-formed fiberglass, or to the fiberglass following collection. Water or other solvents can be removed by heating.

Thereafter the composition undergoes curing wherein a strong binder coating is formed which exhibits good adhesion to glass. Such curing can be conducted by heating. Elevated curing temperatures on the order of 100 to 300°C generally are acceptable. Satisfactory curing results are achieved by heating in an air oven at 200°C for approximately 5 to 20 minutes.

The cured binder at the conclusion of the curing step commonly is present as a secure coating on the fiberglass in a concentration of approximately 0.5 to 50 percent by weight of the fiberglass, and most preferably in a concentration of approximately 1 to 10 percent by weight of the fiberglass.

The present invention provides a formaldehyde-free route to form a securely bound formaldehyde-free fiberglass product. The binder composition of the present invention provides advantageous flow properties, the elimination of required pH modifiers such as sulfuric acid and caustic, and improved overall economics and safety. The binder also has the advantages of being stronger and offering lower amounts of relative volatile organic content during curing, which ensures a safer work place and environment. The cure time of the binder is also seen to be much faster and therefore does favor the economics, while reducing the energy consumption during the curing process and lowering the carbon footprint. The binder also contains a high level of sustainable raw materials further reducing the dependency on fossil based sources for the resin.

The following examples are presented to provide specific examples of the present invention. In each instance the thin glass plate substrate that receives the coating can be replaced by fiberglass. It should be understood, however, that the invention is not limited to the specific details set forth in the Examples.

### EXAMPLE 1

To 1160g of 1, 6 hexanediamine (HDA) dissolved in 2140g water, 980g phosphoric acid was added slowly (molar ratio of 1:1) and the solution was stirred for 10min. The opaque amino-acid salt solution was utilized in the formation of binder in the following examples.

### EXAMPLE 2

To 42.8g of solution of Example 1 was added 18g of anhydrous dextrose (alpha-D-glucose) dissolved in 18g water. The solution was stirred at ambient temperature for 10min. The solution was applied as a thin film on glass and A1 panel, dried in an oven at 100°C for 5min and cured at 200°C for 20 min. The cured brown polymer was hard and insoluble in water and solvents, and showed an excellent adhesion to glass.

### EXAMPLE 3

To 42.8g of solution of Example 1, 54g of anhydrous dextrose dissolved in 54g of water was added. The solution was stirred at ambient temperature for 10min. The solution was applied as a thin film on a glass and A1 panel, dried in an oven at 100°C for 5min and cured at 200°C for 20 min. The cured brown polymer was hard and insoluble in water and solvents, and showed an excellent adhesion to glass.

### EXAMPLE 4

To 42.8g of solution of Example 1, 108g of anhydrous dextrose dissolved in 108g of water was added. The solution was stirred at ambient temperature for 10min. The solution was applied as a thin film on a glass A1 panel, dried in an oven at 100°C for 5min and cured at 200°C for 20min. The cured brown polymer was hard and insoluble in water and solvents, and showed an excellent adhesion to glass.

### EXAMPLE 5

To 42.8g of solution of Example 1, 144g of anhydrous dextrose dissolved in 144g of water was added. The solution was stirred at ambient temperature for 10min. The solution was applied as a thin film on glass and A1 panel, dried in an oven at 100°C for 5min and cured at 200°C for 20min. The cured brown polymer was hard and insoluble in water and solvents and showed an excellent adhesion to glass.

### EXAMPLE 6

To 42.8g of polymer of Example 1 was added 180g of anhydrous dextrose dissolved in 180g of water. The solution was stirred at ambient temperature for 10min. The solution was applied as thin film on glass and A1 panel, dried in oven at 100°C for 5min and cured at 200°C for 20min. The cured brown polymer was hard and insoluble in water and solvents, with excellent adhesion to glass.

### EXAMPLE 7

To 42.8g of solution of Example 1 was added 216g of anhydrous dextrose dissolved in 216g of water. The solution was stirred at ambient temperature for 10 min. The solution was applied as a thin film on glass and A1 panel, dried in an oven at 100°C for 5 min. and cured at 200°C for 20 min. The cured brown polymer was hard and insoluble in water and solvents, and showed an excellent adhesion to glass.

### EXAMPLE 8

To 42.8 g of solution of Example 1 added 270g of anhydrous dextrose dissolved in 270g of water. The solution was stirred at ambient temperature for 10 min. The solution was applied as a thin film on glass and A1 panel, dried in an oven at 100°C for 5 min. and cured at 200°C for 20 min. The cured brown polymer was hard and insoluble in water and solvents and showed an excellent adhesion to glass.

### EXAMPLE 9

To 42.8g of solution of Example 1 added 360g of anhydrous dextrose dissolved in 360g of water. The solution was stirred at ambient temperature for 10 min. The solution was applied as a thin film on glass and A1 panel, dried in an oven at 100°C for 5 min. and cured at 200°C for 20 min. The cured brown polymer was hard and insoluble in water and solvents and showed an excellent adhesion to glass.

### EXAMPLE 10

Examples 2-9 were repeated in the presence of 5% by weight ammonium sulfate. The cured polymers became insoluble in water in less than 10min.

### EXAMPLE 11

To 1160g 1,6 hexanediamine dissolved in 3120g of water, 1960g phosphoric acid was added slowly (molar ratio of 1:2) and the solution was stirred for 10min. The clear amino-acid salt solution was utilized in the formation of binders in the following examples.

### EXAMPLE 12

To 62.4 solution of Example 11 was added 18g of anhydrous dextrose (alpha-D-glucose) dissolved in 18g water. The solution was stirred at ambient temperature for 10min. The solution was applied as a thin film on glass and A1 planel, dried in an oven at 100°C for 5min and cured at 200°C for 20min. The cured brown polymer was hard and insoluble in water and solvents with excellent adhesion to glass.

### EXAMPLE 13

Example 11 was repeated with 54, 108, 144, 180, 216, 270 and 360g dextrose dissolved in similar amounts of water. Each solution was stirred at ambient temperature for 10min. Each solution was applied as a thin film on glass and A1 panel, dried in an oven at 100°C for 5min and cured at 200°C for 20min. A cured brown polymer that was hard and insoluble in water and solvents with excellent adhesion to glass was obtained in each case.

### EXAMPLE 14

Examples 12 and 13 were repeated in the presence of 5% by weight ammonium sulfate. The polymers became insoluble in water in less than 10min.

### EXAMPLE 15 - Plant Trial

To examine the performance of the binder on insulation batt, a binder solution was prepared and applied in the manufacturing of the insulation batt. Processing and performance of the batts made with the binder of this invention was compared with the batts manufactured with a polyacrylic acid binder cured with triethanol amine. To prepare the binder, 196kg phosphoric acid was dissolved in 2470kg water. To this solution was added 2160kg anhydrous dextrose. When the dextrose dissolved, 116kg hexanediamine was added to this solution and dissolved. To this solution 123kg ammonium sulfate was added. After all ingredients dissolved, the clear binder solution was utilized in the manufacture of R-19 and R-13 insulation batt. The binder was applied at the rate of 4.5% binder on glass fiber containing 1% (based on binder) of an amino-propyl silane coupling agent and about 0.5% dedusting oil. The batt was cured at 210C and oven residence time of two minutes. The 32" droop (sag) and recovery data for R-19 insulation batt products are presented in Table 1 and Table 2 respectively.

**Table 1. 32" Droop Data for R-19**

| | Unaged | 7 Day | 14 Day |
|---|---|---|---|
| Control (Acrylic) | 1.1 | 1.7 | 2.2 |
| HPD | 1.1 | 1.9 | 2 |

**Table 2. Recovery for R-19**

| | Unaged | 7 Day | 14 Day |
|---|---|---|---|
| Control (Acrylic) | 6.91 | 6.48 | 6.38 |
| HPD | 7.15 | 6.61 | 6.43 |

As seen from Table 1 and Table 2, the R-19 insulation product of the new formaldehyde free binder of this invention (HPD) has similar performance compared to the commercial acrylic control.

## Claims

1. A curable composition for use in the binding of fiberglass comprising
(i) an aldehyde or ketone and
(ii) an amine salt of an inorganic acid obtainable by reacting the amine with the acid in water wherein the molar ratio of acid functionality to amine functionality is from 1:2 to 2:1
wherein
(iii) the aldehyde is a reducing sugar and the molar ratio of salt to carbonyl is from 1:20 to 20:1 and,
(iv) the amine is a diamine having at least one primary amine group and said amine is selected from the group consisting of ethylene diamine, 1,3-propanediamine, 1,4-butanediamine, 1,5-pentanediamine, 1,6-hexanediamine and mixtures thereof,

2. The curable composition of claim 1, wherein the acid is phosphoric acid.

3. The curable composition of claim 1, wherein the acid is an oxygenated acid selected from the group consisting of phosphoric acid, pyrophosphoric acid, phosphorus acid, sulfuric acid, sulfurous acid, nitric acid, boric acid, hypochloric acid, and chlorate acid.

4. The curable composition of claim 1, wherein the acid is a non-oxygenated acid selected from the group consisting of hydrochloric acid, hydrogen sulfide, and phosphine.

5. The curable composition of claim 1, wherein an aldehyde is used with the salt.

6. The curable composition of claim 5, wherein the reducing sugar is a reducing monosaccharide, disaccharide or polysaccharide.

7. The curable composition of claim 6, wherein the aldehyde is glucose.

8. The curable composition of claim 1, further comprising at least one component selected from the group consisting of adhesion promoters, oxygen scavengers, moisture repellants, solvents, emulsifiers, pigments, fillers, anti-migration aids, coalescent aids, wetting agents, biocides, plasticizers, organosilanes, anti-foaming agents, colorants, waxes, suspending agents, anti-oxidants, and crosslinking catalysts.

9. A process for binding fiberglass comprising applying to fiberglass a composition comprising
(i) an aldehyde or ketone and
(ii) an amine salt of an inorganic acid
wherein
(iii) the aldehyde is a reducing sugar,
(iv) the amine is a diamine having at least one primary amine group and thereafter curing said composition while present on said fiberglass.

10. The process for binding fiberglass according to claim 9, wherein said amine is selected from the group consisting of 1,2-diethylamine, 1,3-propanediamine, 1,4-butanediamine, 1,5-pentanediamine, 1,6-hexanediamine, α,α.'-diaminoxylene, and mixtures of these.

11. The process for binding fiberglass according to claim 9, wherein the acid is phosphoric acid.

## Patentansprüche

1. Härtende Zusammensetzung zur Verwendung beim Binden von Glasfaser, umfassend
(i) einen Aldehyd oder Keton und
(ii) ein Aminsalz einer anorganischen Säure, erhältlich durch Umsetzung des Amins mit der Säure in Wasser wobei das Molverhältnis von Säurefunktionalität zu Aminfunktionalität 1:2 bis 2:1 beträgt
wobei
(iii) das Aldehyd ist ein reduzierender Zucker und das Molverhältnis von Salz zu Carbonyl beträgt 1:20 bis 20:1 und,
(iv) das Amin ein Diamin mit mindestens einer primären Amin-Gruppe ist und das Amin ausgewählt ist aus der Gruppe bestehend aus Ethylendiamin, 1,3-Propandiamin, 1,4-Butandiamin, 1,5-Pentandiamin, 1,6-Hexandiamin und Mischungen davon.

2. Härtende Zusammensetzung nach Anspruch 1, wobei die Säure Phosphorsäure ist.

3. Härtende Zusammensetzung nach Anspruch 1, wobei die Säure eine oxygenierte Säure ist, die ausgewählt ist aus der Gruppe bestehend aus Phosphorsäure, Pyrophosphorsäure, Phosphorsäure, Schwefelsäure, schwefelige Säure, Salpetersäure, Borsäure, hypochlorige Säure, und Chloratsäure.

4. Härtende Zusammensetzung nach Anspruch 1, wobei die Säure eine nichtoxygenierte Säure ist, die ausgewählt ist aus der Gruppe bestehend aus Salzsäure, Wasserstoffsulfid, und Phosphin.

5. Härtende Zusammensetzung nach Anspruch 1, wobei ein Aldehyd mit dem Salz verwendet wird.

6. Härtende Zusammensetzung nach Anspruch 5, wobei der reduzierende Zucker ein reduzierendes Monosaccharid, -Disaccharid oder -Polysaccharid ist.

7. Härtende Zusammensetzung nach Anspruch 6, wobei der Aldehyd Glukose ist.

8. Härtende Zusammensetzung nach Anspruch 1, weiterhin umfassend mindestens einer Komponente, die ausgewählt ist aus der Gruppe bestehend aus Haftvermittlern, Sauerstoff-Scavengern, Feuchtigkeit abweisenden Mitteln, Lösungsmitteln, Emulgatoren, Pigmenten, Füllstoffen, Anti-Migrations-Hilfsmitteln, koaleszenten Hilfsmitteln, Netzmitteln, Bioziden, Weichmachern, Organosilanen, Entschäumern, Farbstoffen, Wachsen, Suspensionsmitteln, Antioxidationsmitteln und Vernetzung-Katalysatoren.

9. Ein Verfahren zum Binden von Glasfaser umfassend das Aufbringen einer Zusammensetzung auf Glasfasern enthaltenden
(i) einen Aldehyd oder Keton und
(ii) ein Aminsalz einer anorganischen Säure
wobei
(iii) das Aldehyd ein reduzierender Zucker ist,
(iv) das Amin ein Diamin mit mindestens einer primären Amin-Gruppe ist, und danach das Aushärten der besagten Zusammensetzung, während sie an besagter Glasfaser vorhanden ist.

10. Verfahren zum Binden von Glasfaser nach Anspruch 9, wobei das Amin ausgewählt ist aus der Gruppe bestehend aus 1,2-Diethylamin, 1,3-Propandiamin, 1,4-Butandiamin, 1,5-Pentandiamin, 1,6-Hexandiamin, α, α'-Diaminoxylen und Mischungen davon.

11. Das Verfahren zum Binden von Glasfaser gemäß Anspruch 9, wobei die Säure eine Phosphorsäure ist.

## Revendications

1. Composition durcissable pour utilisation dans la liaison de fibres de verre comprenant
(i) un aldéhyde ou cétone et
(ii) un sel d'amine d'un acide inorganique, disponible par la réaction de l'amine avec l'acide dans l'eau où le rapport molaire de la fonctionnalité acide à fonctionnalité amine est de 1:2 à 2:1,
où
(iii) l'aldéhyde est un sucre de réduction et le rapport molaire de sel à carbonyle est de 1:20 à 20:1 et
(iv) l'amine est une diamine ayant au moins un groupe amine primaire et ladite amine est sélectée du groupe formé d'éthylène diamine, 1,3-propanediamine, 1,4-butanediamine, 1,5-pentanediamine, 1,6-hexanediamine, et mélanges de ceux-ci.

2. Composition durcissable selon la revendication 1, où l'acide est acide phosphorique.

3. Composition durcissable selon la revendication 1, où l'acide est un acide oxygéné sélecté du groupe formé d'acide phosphorique, acide pyrophosphorique, acide phosphoré, acide sulfurique, acide sulfuré, acide nitrique, acide borique, acide hypochlorique, et acide de chlorate.

4. Composition durcissable selon la revendication 1, où l'acide est un acide non-oxygéné sélecté du groupe formé d'acide hydrochlorique, sulfure d'hydrogène, et phosphine.

5. Composition durcissable selon la revendication 1, où l'aldéhyde est utilisé avec le sel.

6. Composition durcissable selon la revendication 5, où le sucre de réduction est un monosaccharide, disaccharide ou polysaccharide de réduction.

7. Composition durcissable selon la revendication 6, où l'aldéhyde est glucose.

8. Composition durcissable selon la revendication 1, comprenant de plus au moins un composant sélecté du groupe formé de promoteurs d'adhésion, désoxygénants, produits anti-humidité, solvants, émulsifiants, pigments, produits de remplissage, aides anti-migration, agents de coalescence, agents de mouillage, biocides, plastifiants, organosilanes, agents anti-mousse, colorants, cires, agents de suspension, antioxydants, et catalyseurs de réticulation.

9. Procédé pour lier les fibres de verre comprenant appliquer aux fibres de verre une composition comprenant
(i) un aldéhyde ou cétone et
(ii) un sel d'amine d'un acide inorganique,
où
(iii) l'aldéhyde est un sucre de réduction,
(iv) l'amine est une diamine ayant au moins un groupe amine primaire et durcir ensuite ladite composition présente sur lesdites fibres de verre.

10. Procédé pour lier les fibres de verre selon la revendication 9, où ladite amine est sélectée du groupe formé de 1,2 diéthylamine, 1,3-propanediamine, 1,4-butanediamine, 1,5-pentanediamine, 1,6-hexanediamine, α, α'-diaminoxylène et mélanges de ceux-ci.

11. Produit en fibres de verre formé par le procédé pour lier les fibres de verre selon la revendication 9, où l'acide est un acide phosphorique.
